# DEMANDE DE BREVET EUROPEEN

(11) **EP 0 971 319 A2**
(43) Date de publication de la demande: **12.01.2000**
(21) Numéro de dépôt: 99111925.6
(22) Date de dépôt: 23.04.1992
(51) Int. Cl.: G06T 15/10

(54) **Procédé de modélisation d un système de prise de vues et procédé et système de réalisation de combinaisons d images réelles et d images de synthèse**

(30) Priorité: 26.04.1991 FR 9105205
(62) Demande divisionnaire de: 92401151.3
(71) Demandeur: DISCREET LOGIC INC., Montréal, Québec H3C 2L7 (CA)
(72) Inventeur: Fellous, Armand, 94300 Vincennes (FR)
(74) Mandataire: Casalonga, Axel

(57) **Abrégé**

Procédé de réalisation d'images comportant une combinaison libre d'images réelles (13) obtenues par au moins un système de prise de vues (1) comportant une caméra réelle (2) montée sur un support mobile (4, 5) et d'images de synthèse (12) obtenues par un ordinateur graphique (11) équipé d'un logiciel de synthèse d'images, caractérisé par le fait que :
- on réalise préalablement une modélisation paramétrique du système de prise de vues (1) à partir d'une pluralité d'images réelles contenant chacune au moins un point de contrôle (23) dont la position géométrique dans l'espace réel est connue, la position des points de contrôle étant transmise à l'ordinateur (11) en même temps que les valeurs mesurées d'une pluralité de grandeurs physiques captées, caractéristiques de la géométrie et de l'optique de la caméra réelle (2) et de son support (4, 5) pour chaque image;
- puis, au cours de la prise de vues d'une séquence d'images, on mesure, en synchronisme avec la génération des images réelles, les grandeurs physiques précitées captées pour chaque image;
- on transmet en temps réel et en synchronisme avec la génération d'image, lesdites grandeurs captées à l'ordinateur graphique (11) pour déterminer les paramètres du modèle du système de prise de vues (1);
- on génère une séquence d'images numériques de synthèse (12) à une fréquence proche de celle des images réelles (13) en déduisant de ces paramètres les caractéristiques de calcul de chaque image de synthèse de façon à obtenir une parfaite cohérence géométrique entre chaque image réelle et chaque image de synthèse correspondante;
- et on mélange une partie de l'image réelle avec une partie de l'image de synthèse.

## Description

L'invention est relative à un procédé permettant une modélisation paramétrique d'un système de prise de vues comprenant une caméra réelle montée sur un support mobile. Elle concerne également la réalisation d'images comportant chacune une combinaison libre d'une image réelle obtenue par un système de prise de vues et d'une image de synthèse obtenue par un ordinateur graphique.

La réalisation d'images de synthèse en trois dimensions nécessite la construction d'une base d'entités géométriques tridimensionnelles dans la mémoire d'un ordinateur, des informations décrivant les caractéristiques visuelles de chacune des entités s'y trouvant attachées. L'ensemble ainsi construit constitue ce que l'on appelle un monde "virtuel" par opposition au monde réel dans lequel évoluent par exemple des acteurs ou un système de prise de vues. Cette étape de construction dans l'ordinateur est généralement appelée une "modélisation".

Par ailleurs, la réalisation d'images réelles obtenues par la capture d'une scène réelle par une caméra réelle qui peut être avantageusement une caméra vidéo faisant partie d'un système de prise de vues fournit des images ou des séquences d'images réelles. La modélisation précitée du sytème de prise de vues réel permet de déterminer dans le monde virtuel un modèle paramétrique de visualisation assimilable à une "caméra virtuelle".

La synthèse d'images en trois dimensions a pris une place importante dans la chaîne de génération d'images et dans leur manipulation. Jusqu'à présent cependant il n'existe que peu d'exemples de réalisation combinant librement des images de synthèse et des images réelles. Les seuls exemples de réalisation connus combinant des images de synthèse et des images réelles font partie du domaine des effets spéciaux et constituent de petites séquences, de mise au point délicate, apparaissant comme des exploits techniques.

Pour réaliser une combinaison d'images, qu'il s'agisse d'une image fixe ou d'une image faisant partie d'une séquence d'images, il convient de réaliser une image hybride dont certaines parties proviennent d'une image obtenue par la prise de vues d'une scène réelle par une caméra réelle tandis que d'autres parties proviennent d'une image de synthèse. Cette image superpose donc deux ou plus de deux mondes distincts comprenant au moins un monde réel et au moins un monde "virtuel". Pour que l'effet obtenu donne l'impression de l'image d'un seul monde c'est-à-dire d'un monde composite fait de l'emboîtement de deux mondes parallèles, chacun contribuant pour partie à l'image finale, il est nécessaire d'obtenir une parfaite cohérence visuelle entre l'image réelle et l'image de synthèse.

Pour rendre plus claire cette notion de cohérence visuelle, imaginons un cube en bois, peint en jaune, placé devant un système de prise de vues et après réglage de la caméra équipant ce système de prise de vues, l'image qui en résulte qui est une image réelle. Si l'on génère dans la mémoire d'un ordinateur un monde virtuel comportant un cube ayant les mêmes dimensions que le cube réel auquel on alloue des attributs d'aspect significant "en bois, peint en jaune" on peut obtenir, après avoir fixé les paramètres de la caméra virtuelle, une image de synthèse d'un "cube en bois, peint en jaune". La cohérence visuelle entre l'image réelle et l'image de synthèse est le degré de ressemblance existant entre ces deux images. La cohérence visuelle repose essentiellement sur la cohérence géométrique : on dira de deux images qu'elles sont géométriquement cohérentes si chaque sommet du cube réel occupe dans l'image réelle la même position que son homologue du cube virtuel dans l'image de synthèse.

Pour obtenir une telle cohérence géométrique il est tout d'abord nécessaire que la caméra virtuelle soit une modélisation correcte du système de prise de vues réel utilisé et que cette modélisation soit paramétrique de façon à permettre la manipulation du système de prise de vues réel.

La présente invention a ainsi pour premier objet de faciliter la détermination aisée dans un ordinateur hôte connecté à une caméra réelle faisant partie d'un système de prise de vues, d'un modèle paramétrique de la caméra réelle analogue à une caméra virtuelle.

Lorsque ce modèle paramétrique est réalisé, il est encore nécessaire que l'ordinateur crée pour chaque image réelle une image virtuelle qui soit géométriquement cohérente. On peut alors parler de cohérence dynamique et d'asservissement de la caméra virtuelle par la caméra réelle.

L'invention a donc également pour objet, après avoir créé une caméra virtuelle au moyen d'un modèle paramétrique d'une caméra réelle faisant partie d'un système de prise de vues, la réalisation à chaque instant d'un couplage dynamique entre les deux caméras réelle et virtuelle assurant une parfaite cohérence entre chaque image réelle et chaque image virtuelle d'une série d'images et permettant un asservissement de la caméra virtuelle à la caméra réelle et vice versa.

L'invention a également pour objet un système de réalisation d'images permettant une combinaison libre d'images réelles et d'images de synthèse géométriquement cohérentes. On réalise ainsi un couplage dynamique de la caméra réelle et de la caméra virtuelle.

Conformément à l'invention, le procédé de modélisation paramétrique d'un système de prise de vues comprenant une caméra réelle montée sur un support mobile utilise un ordinateur hôte connecté à différents capteurs prévus sur le système de prise de vues. Selon l'invention, on fait générer par le système de prise de vues une pluralité d'images réelles contenant chacune au moins un point de contrôle dont la position géométrique dans l'espace réel est connue.

On mesure pour chaque image réelle ainsi générée une pluralité de grandeurs géométriques et optiques du système de prise de vues captées par les capteurs précités et on transmet les valeurs de ces grandeurs captées à l'ordinateur hôte.

On informe l'ordinateur hôte de la position de chaque point de contrôle dans chaque image.

Enfin on modélise le système de prise de vues par un calcul mettant en rapport l'ensemble des informations relatives à la position des différents points de contrôle avec les valeurs correspondantes des grandeurs captées.

Il convient de préférence d'utiliser au moins trois points de contrôle non alignés. Dans la pratique cependant on utilisera un plus grand nombre de points de contrôle. Ceux-ci peuvent faire partie d'objets tridimensionnels de calibrage de géométrie prédéfinie et connue.

Le procédé selon l'invention de réalisation d'images comportant une combinaison libre d'images réelles obtenues par au moins un système de prise de vues comportant une caméra réelle montée sur un support mobile et d'images de synthèse obtenues par un ordinateur graphique équipé d'un logiciel de synthèse d'images, comprend différentes étapes.

On réalise tout d'abord une modélisation paramétrique du système de prise de vues à partir d'une pluralité d'images réelles contenant chacune au moins un point de contrôle dont la position géométrique dans l'espace réel est connue, la position de ces points de contrôle étant transmise à l'ordinateur en même temps que les valeurs mesurées d'une pluralité de grandeurs physiques captées, caractéristiques de la géométrie et de l'optique de la caméra réelle et de son support pour chaque image. Le système de prise de vues étant à tout instant caractérisé par les valeurs d'un certain nombre de grandeurs physiques géométriques et optiques variables, la caméra virtuelle constituée par la modélisation paramétrique du système de prise de vues se trouve complètement déterminée à chaque instant par les valeurs des paramètres qui la gouvernent.

Les images réelles générées par la caméra du système de prise de vues peuvent être affichées sur l'écran de l'ordinateur graphique. Différents tracés graphiques peuvent alors être superposés à ces images réelles afin de vérifier la position des différents points de contrôle dans l'image réelle lors de l'opération préalable de modélisation. Il y a lieu de noter à cet égard que ces différents points de contrôle peuvent parfaitement se trouver ultérieurement en dehors du champ de la caméra réelle lors du tournage de la séquence d'images.

Une fois cette phase préliminaire de modélisation terminée, on procède à la prise de vues d'une image ou d'une séquence d'images. Au cours de la prise de vues d'une telle séquence, on mesure, en synchronisme avec la génération des images réelles, les grandeurs physiques précitées captées pour chaque image. On transmet en temps réel et en synchronisme avec la génération des images, lesdites grandeurs captées à l'ordinateur hôte de façon à définir les paramètres du modèle du système de prise de vues.

On génère alors une séquence d'images numériques de synthèse à une fréquence proche de celle des images réelles en déduisant de ces paramètres, les caractéristiques de calcul de chaque image de synthèse de façon à obtenir une parfaite cohérence géométrique entre chaque image réelle et chaque image de synthèse correspondante.

Enfin on mélange une partie de l'image réelle avec une partie de l'image de synthèse dans chaque image d'une séquence d'images, ce mélange pouvant être fait dans l'ordinateur hôte ou dans un mélangeur externe.

Le système de prise de vues, qui comprend généralement une caméra et son support génère des images à un rythme connu (24, 25 ou 30 images par seconde par exemple). Selon l'invention, l'acquisition des mesures des grandeurs physiques régissant le système de prise de vues réel et leur transmission à l'ordinateur hôte se font de façon synchrone à la génération d'images. L'ordinateur crée pour chaque image réelle, une image virtuelle qui lui est géométriquement cohérente. On obtient donc une cohérence dynamique assimilable à un asservissement de la caméra virtuelle par la caméra réelle. En d'autres termes la caméra réelle pilote la caméra virtuelle.

Les grandeurs physiques variables caractéristiques de la géométrie et de l'optique du système de prise de vues sont en général modifiables par l'application de forces ou de couples sur des parties mécaniques mobiles du système de prise de vues. C'est ainsi par exemple que la bague de zoom de l'objectif à focale variable peut être entraînée en rotation. De la même manière, le chariot ponant le support de la caméra sur un rail de déplacement appelé rail de travelling peut voir sa position modifiée. Les forces nécessaires à ces mouvements sont appliquées soit manuellement soit par des moteurs. Lorsque toutes les grandeurs physiques variables du système de prise de vues sont modifiées au cours de la prise de vues d'une séquence d'images par des moteurs, il devient possible de renverser le sens d'asservissement. Les moteurs pilotés par un ordinateur peuvent en effet positionner le système de prise de vues réel de sorte que les images qu'il génère soient dynamiquement géométriquement cohérentes avec celles que fournit la caméra virtuelle. On obtient alors un asservissement de la caméra réelle par la caméra virtuelle.

La présente invention permet les deux sens d'asservissement pour un système de prise de vues c'est-à-dire un véritable couplage dynamique de la caméra réelle et de la caméra virtuelle.

Après la phase préliminaire il peut encore être nécessaire de compléter la modélisation paramétrique du système de prise de vues par la détermination de grandeurs physiques dites "de prise" qui valent d'une prise de vues à l'autre niais qui sont maintenues fixes pendant chaque prise de vues.

A cet effet, on procède à une phase d'initialisation préalable à la prise de vues en générant au moyen du système de prise de vues réel, une pluralité d'images réelles, chacune résultant de la visée d'un point de contrôle en faisant coïncider ledit point de contrôle avec le point de l'image aligné avec l'axe optique de la caméra. La position du point de contrôle dans l'espace est transmise à l'ordinateur en même temps que les valeurs mesurées des grandeurs physiques captées pour chaque image. Le modèle paramétrique ayant ainsi été complété la prise de vues de la séquence d'images peut commencer comme indiqué précédemment.

Dans un mode de réalisation préféré de l'invention les images combinées instantanées obtenues par le procédé de l'invention sont en outre envoyées en temps réel sur au moins un moniteur de contrôle. L'opérateur du système de prise de vues réel peut de cette manière disposer sur un moniteur de visée d'images hybride ce qui facilite largement les déplacements du système de prise de vues lors du tournage.

Dans un mode de réalisation préféré de l'invention la caméra du système de prise de vues est une caméra vidéo asservie à un signal de synchronisation et l'enregistrement de chaque image est associé à un code de temps (time-code). Les données relatives à chaque image réelle et comportant les grandeurs captées sont alors transmises avec le code de temps (time-code) correspondant à l'image vers l'ordinateur graphique à chaque top de synchronisation.

Les données transmises à l'ordinateur peuvent être avantageusement stockées dans un fichier mémorisé soit dans l'ordinateur soit dans une mémoire externe. De cette manière, les images de synthèse générées au moment de la prise de vue à une fréquence proche du temps réel peuvent être des images simplifiées par rapport aux images de synthése générées après la prise de vues à partir du fichier mémorisé pour la composition des images hybrides combinées définitives.

Les grandeurs captées caractéristiques de l'optique et de la géométrie du système de prise de vues peuvent comprendre par exemple l'ouverture du diaphragme, la mise au point, la focale de l'objectif à focale variable (zoom), la vitesse d'obturation, l'élévation de la caméra, la rotation du support de la caméra autour de son axe vertical, l'inclinaison du support de la caméra autour de son axe horizontal, la position du chariot support de la caméra par rapport à un rail de travelling etc...

Le système selon l'invention de réalisation d'images comportant une combinaison libre d'images réelles et d'images de synthèse comprend généralement les éléments suivants :
- au moins un système de prise de vues comportant une caméra réelle montée sur un support mobile
- une pluralité de capteurs disposés à différents emplacements sur la caméra et sur son support mobile de façon à pouvoir mesurer une pluralité de grandeurs physiques caractéristiques de la géométrie et de l'optique du système de prise de vues
- des moyens électroniques pour recevoir les données mesurées par les différents capteurs, un signal de synchronisation des images réelles générées par le système de prise de vues et un code temporel (time-code) pour chaque image et pour émettre, à chaque top de synchronisation, l'ensemble de ces données sous la forme d'un paquet unique comportant le code temporel (time-code) correspondant
- un ordinateur graphique équipé d'un logiciel de synthèse d'images numériques
- une liaison entre lesdits moyens électroniques et l'ordinateur graphique.

Le système peut comporter plusieurs systèmes de prise de vues chacun muni d'une caméra réelle.

Les caméras utilisées peuvent être des caméras vidéo, des caméras de télévision haute définition (HD) au même titre que des caméras cinématographiques.

L'invention sera mieux comprise à l'étude d'un exemple de réalisation nullement limitatif illustré schématiquement par les dessins annexés sur lesquels :
la figure 1 montre schématiquement l'ensemble d'un système de réalisation d'images selon l'invention et
la figure 2 illustre de manière simplifiée un système de prise de vues comportant une caméra et un support mobile l'ensemble pouvant être utilisé dans le système de réalisation d'images de la figure 1.

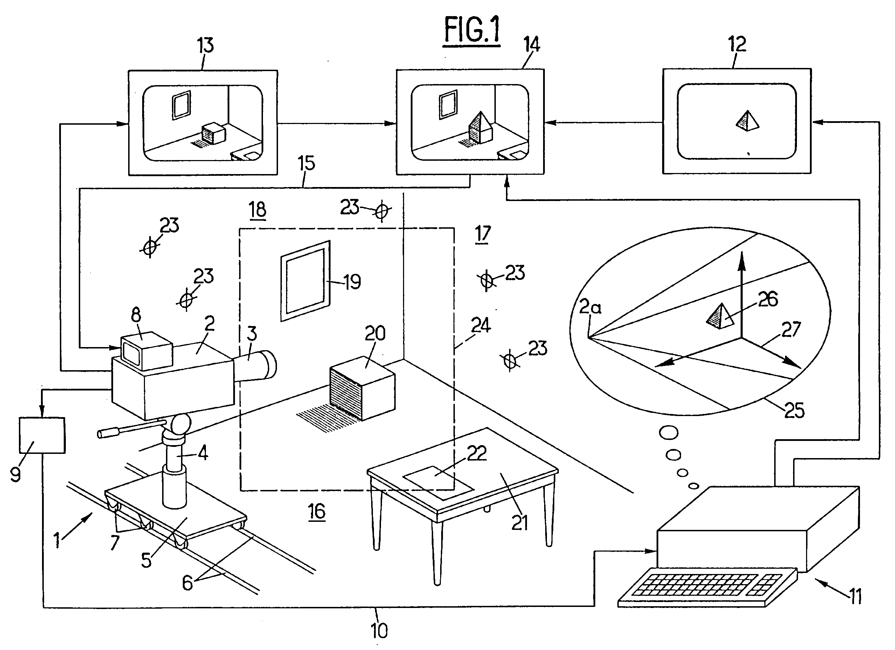

Tel qu'il est illustré sur la figure 1 le système de réalisation d'images de l'invention comprend un système de prise de vues référencé 1 dans son ensemble comprenant une caméra vidéo 2 équipée d'un objectif à focale variable 3 et montée sur un support constitué par un pied 4 et un chariot 5 pouvant se déplacer sur des rails 6 pour des mouvements de travelling au moyen de roues 7. Sur la caméra 2 se trouve disposé un moniteur de visée 8. La caméra comprend en outre une carte électronique d'acquisition 9 représentée schématiquement sous la forme d'un bloc sur la figure 1. La cane électronique 9 est reliée par la liaison 10 à un ordinateur graphique 11 équipé d'un logiciel de synthèse d'images numériques. Les images numériques de synthèse générées par l'ordinateur 11 peuvent être visualisées sur un écran 12. Les images réelles générées par la caméra 2 peuvent quant à elles être visualisées sur un écran 13. Bien entendu les écrans 12 et 13 pourraient n'en faire qu'un.

Selon l'invention, l'ordinateur 11 est en outre capable, après avoir assuré la cohérence géométrique entre l'image réelle apparaissant sur le moniteur 13 et l'image de synthèse apparaissant sur le moniteur 12 de mélanger ces deux images de façon à créer une image combinée hybride comportant des parties de l'image réelle et des parties de l'image de synthèse. Bien entendu dans une variante ce mélange pourrait être effectué par un mélangeur classique. Cette image hybride combinée apparaît sur le moniteur de contrôle 14 qui pourrait également être constitué par une fenêtre dans l'écran 12 de l'ordinateur 11. L'image hybride peut également être renvoyée par la connexion 15 sur le moniteur de visée 8.

Comme on peut le voir en outre sur la figure 1 le système de prise de vues 1 se trouve situé dans une pièce représentant le monde réel et comportant à titre d'exemple un plancher 16 sur lequel sont placés les rails 6 et deux murs 17 et 18 à angle droit. Sur le mur 18 se trouve un tableau 19. Un volume cubique 20 et une table 21 sur laquelle est posée une feuille de papier 22 se trouvent également dans le décor réel. Une pluralité de points de contrôle 23, ici au nombre de cinq dans l'exemple illustré, sont constitués par de petites cibles dessinées ou collées sur les murs respectifs 17 et 18 à différents endroits. Sur la figure 1 se trouve en outre schématisé sous la forme d'un rectangle en trait fin 24 le champ maximal de vision du système de prise de vues 1 prévu pour la prise de vues définitive. On notera que les différents points de contrôle 23 se trouvent en dehors du champ de prise de vues définitif ainsi délimité.

On a encore représenté symboliquement sur la figure 1 sous la référence 25 le monde virtuel qui se trouve défini par un modèle paramétrique constitué dans l'ordinateur il et capable de générer une image de synthèse sous la forme d'un objet pyramidal 26 orienté par rapport à un trièdre de référence 27 et vu par une "caméra virtuelle 2a.

Selon la présente invention, l'objet 26 présente une parfaite cohérence géométrique avec l'image réelle. Dans ces conditions, non seulement son orientation est correcte par rapport à celle de l'objet cubique 20 mais encore ses dimensions sont compatibles de façon à permettre, par combinaison de l'image réelle visible sur l'écran 13 avec l'image de synthèse visible sur l'écran 12 d'obtenir une image combinée apparaissant sur l'écran 14 sur laquelle il n'est pas possible de distinguer les éléments réels des éléments de synthèse.

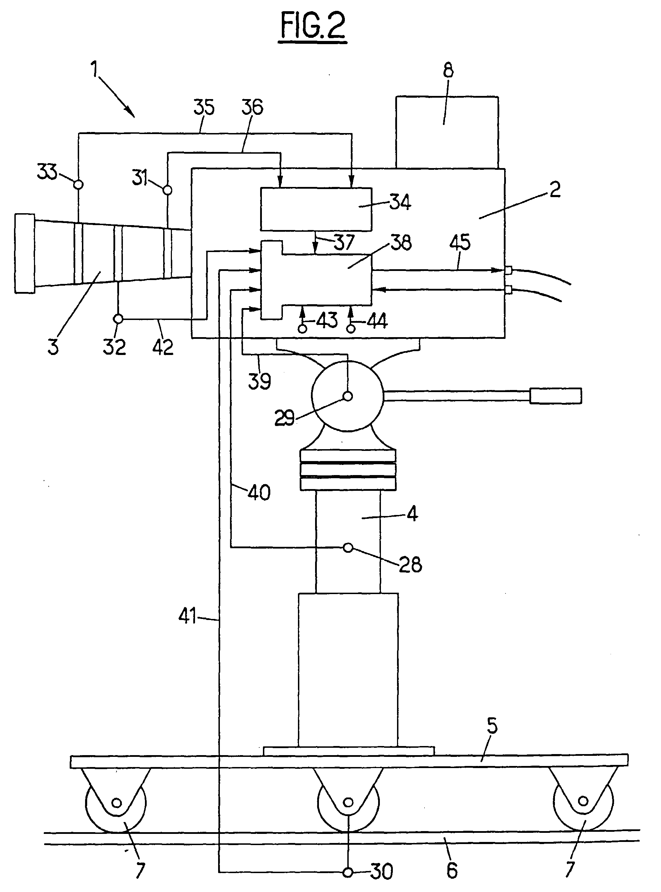

En se reportant à la figure 2 on voit que le système de prise de vues 1 comporte une pluralité de capteurs disposés à différents emplacements de la caméra 2 et de son support 4,5. A titre d'exemple on a représenté sur la figure 2 un capteur 28 pour les mouvements dits de panoramiques c'est-à-dire de rotation autour d'un axe vertical du pied 4, un capteur 29 de mouvements de plongée c'est-à-dire d'une rotation autour d'un axe horizontal, un capteur 30 de travelling fournissant une indication sur les déplacements du chariot 5, un capteur 31 de mise au point monté sur la bague de mise au point de l'objectif 3, un capteur 32 d'ouverture de diaphragme également monté sur l'objectif 3 et un capteur de zoom 33. Un circuit électronique 34 faisant partie de la carte d'acquisition 9 visible sur la figure 1 reçoit, par les connexions 35 et 36, les signaux émis par les capteurs 31 de mise au point et 33 de zoom. Il peut s'agir en particulier de capteurs équipés d'un système de codage optique fournissant des données sur des déplacements angulaires. Les données traitées par le circuit électronique 34 sont ensuite envoyées par la connexion 37 sur un circuit d'acquisition électronique 38 faisant partie de la cane d'acquisition 9 visible sur la figure 1 qui reçoit les signaux issus des autres capteurs par les connexions 39, 40, 41 et 42.

Les signaux correspondant aux différents capteurs sont généralement sous forme analogique.

Les différents capteurs 31, 32 et 33 fournissent des informations sur les caractéristiques optiques du système de prise de vues. Bien entendu d'autres caractéristiques optiques pourraient être prises en compte dans la pratique.

Les différents capteurs 28, 29 et 30 fournissent des informations sur les caractéristiques géométriques du système de prise de vues.

On comprendra bien entendu que le nombre de ces capteurs pourrait être augmenté par rapport à l'exemple illustré. On pourrait notamment donner des informations sur l'élévation de la caméra par rapport au sol et sur d'autres orientations de la caméra par rapport à son pied.

Les capteurs 28, 29 et 30 peuvent avantageusement être constitués sous la forme de codeurs optiques dont les informations sont directement traitées par le circuit d'acquisition 38.

Le circuit d'acquisition 38 comporte en outre une entrée de synchronisation 43 recevant les tops de synchronisation des images générées par la caméra 2 ainsi qu'une entrée 44 recevant le code temporel (time-code) correspondant à chaque image générée.

Le rôle du circuit d'acquisition 38 est de collecter l'ensemble des valeurs mesurées par les différents capteurs en synchronisme avec la prise de vue vidéo et de les envoyer par paquets correspondant chacun à un code temporel (time-code) par l'intermédiaire de la connexion de sortie 45 vers l'ordinateur graphique 11.

On va maintenant décrire le fonctionnement du système de réalisation d'images selon l'invention.

Le système de prise de vues 1 constitué de la caméra complète 2 avec son optique 3 à focale variable et son système de manipulation permettant des panoramiques horizontaux et verticaux, son pied 4 permettant l'élévation et son système de chariot 5 permettant des travellings sur les rails 6, est utilisé pour simultanément obtenir des images de la scène réelle et d'autre part piloter dans l'ordinateur graphique 11 un ensemble de paramètres permettant de calculer des images de synthèse en trois dimensions. Plus précisément l'ensemble du système est conçu pour que le monde virtuel 25 vu par la caméra virtuelle 2a et visualisé en images de synthèse soit constamment cohérent d'un point de vue géométrique avec le monde réel vu par la caméra 2.

Pour illustrer ce principe de cohérence considérons le cube 20 qui présente certaines dimensions réelles. Dans le monde virtuel 25 l'ordinateur 11 équipé de son logiciel de synthèse d'images est capable de créer une pyramide 26 de base carrée comportant un côté exactement identique au côté du cube réel 20 et orienté de la même manière. La caméra 2 librement manipulée par son opérateur peut alors créer selon l'invention une séquence d'images ayant ce cube 20 pour sujet dans le décor réel visible sur l'écran 13. Simultanément et avec sensiblement la même fréquence, est créée par l'ordinateur 11 une séquence équivalente d'images de synthèse telles que si l'on superpose deux à deux les images réelles et de synthèse correspondantes, le cube 20 réel et la pyramide 26 de synthèse viennent exactement se superposer donnant l'impression d'un volume unique. Cette propriété du système illustre la cohérence géométrique entre les deux sources d'images réelles et virtuelles.

Pour obtenir une telle cohérence géométrique il est nécessaire le connaître avec une grande précision l'ensemble des caractéristiques physiques géométriques et optiques du système de prise de vues réelle 1 dans la mesure où de telles caractéristiques affectent l'image réelle produite à chaque instant.

Ces grandeurs caractéristiques physiques se répartissent en plusieurs catégories :
- les grandeurs physiques constantes fixes pour toutes les prises de vues
- les grandeurs physiques constantes pendant une prise de vues mais pouvant varier d'une prise à l'autre dite "grandeurs de prise"
- enfin les grandeurs physiques variables au cours de la prise de vues et mesurées en permanence par les différents capteurs 29 à 33 dites "grandeurs captées".

Parmi les grandeurs physiques constantes pour toutes les prises de vues on pourra noter par exemple la taille de la matrice de diodes CCD de la caméra 2, le nombre de cellules de cette matrice, le décalage entre l'axe optique et le centre de la matrice de diodes CCD, la position relative entre l'axe vertical de panoramique du pied 4 et l'axe horizontal 29 du mouvement de plongée.

Parmi les grandeurs physiques fixes en cours de prise mais qui peuvent varier d'une prise à l'autre, on notera par exemple la position du rail 6 dans le monde réel ou, en l'absence d'un chariot de travelling, la position du pied de support d'une caméra fixe.

Les grandeurs physiques "captées" sont quant à elles par exemple celles qui sont mesurées par les capteurs illustrés sur la figure 2 référencés 28 à 33.

Selon l'invention, avant toute prise de vues, on procède à une phase d'analyse du système de prise de vues de façon à définir un modèle paramétrique du système de prise de vues dans l'ordinateur graphique 11.

A cet effet, on réalise à l'aide du système de prise de vues 1 comportant la caméra 2, une pluralité d'images réelles contenant chacune au moins l'un des points de contrôle 23. La position géométrique de chacun des points de contrôle 23 dans l'espace réel étant parfaitement connue, peut être introduire à titre de renseignement géométrique dans l'ordinateur graphique 11. On notera que lors de la réalisation de ces images réelles, la caméra 2 est placée de façon à pouvoir effectivement visualiser les différents points de contrôle 23 placés comme on l'a dit précédemement en dehors du champ normal de la future prise de vues.

Pour chacune des images réelles ainsi générées toutes les grandeurs captées sont traitées par le circuit électronique 34 et le circuit d'acquisition électronique 38 puis transmises en synchronisme avec les images par la liaison 45 à l'ordinateur 11.

Après avoir ainsi réalisé une pluralité de telles images dans laquelle on retrouve chaque fois un certain nombre de points de contrôle 23 identifiés chacun par exemple par un numéro, on procède dans l'ordinateur 11 à l'analyse de la relation entre les informations sur la position des différents points de contrôle véhiculés par les images réelles émanant de la caméra 2 elle-même et les informations correspondantes fournies simultanément par les différents capteurs des caractéristiques géométriques et optiques variables du système de prise de vues 1.

On notera qu'il est nécessaire de disposer d'au moins trois points de contrôle 23 non alignés pour fournir des renseignements suffisants à l'ordinateur 11. Dans la pratique cependant on prévoiera un nombre plus grand de tels points de contrôle 23.

On notera que dans un mode de réalisation préféré de l'invention, les images générées par la caméra 2 peuvent être affichées en même temps que sur d'autres moniteurs de contrôles, sur l'écran 12 de l'ordinateur graphique 11 dans une zone particulière de cet écran ou fenêtre que l'on peut positionner où on le désire. Il est alors facile d'exécuter par programme dans cette même fenêtre différents tracés graphiques qui viennent se superposer à l'image issue de la caméra 2 du système de prise de vues 1. Etant donné que l'on retrouve dans chaque image réelle issue du système de prise de vues 1 un certain nombre de points de contrôle 23 parfaitement identifiés par leur numéro, il est facile, en déplaçant un curseur sur la fenêtre par exemple à l'aide d'une souris et en cliquant sur la souris quand le curseur est sur un point de contrôle, d'informer l'ordinateur 11 de la position exacte de ce point de contrôle dans l'image.

Bien entendu tout autre méthode permettant de renseigner l'ordinateur graphique sur la position des différents points de contrôle dans l'image peut convenir.

Grâce à l'ensemble de ces informations, il est alors possible de réaliser un modèle paramétrique dans le monde virtuel du système de prise de vues réel, constituant en quelque sorte une caméra virtuelle dans le monde virtuel. L'ordinateur est ainsi capable de mémoriser une pluralité de tables de conversion fournissant les valeurs des paramètres de la caméra virtuelle pour chaque modification de l'un des paramètres de la caméra réelle. On notera que la définition et le calcul de ce modèle paramétrique du système de prise de vues réel 1 se fait une fois pour toutes pour chaque système de prise de vues de sorte qu'il n'y a pas lieu de répéter ces opérations plusieurs fois.

Dans certains cas il peut se faire, comme on l'a indiqué précédemment, que certaines grandeurs physiques fixes du système de prise de vues 1 varient cependant entre deux prises de vue. Dans ce cas il est encore nécessaire, avant la prise de vues effective, de procéder à une opération dite "d'initialisation" permettant de renseigner l'ordinateur 11 sur la situation effective du système de prise de vues 1 dans le monde réel. Cela peut être le cas, par exemple si les rails 6 ont été déplacés dans un autre décor réel depuis la précédente prise de vues.

A cet effet, le modèle paramétrique du système de prise de vues doit être complété par des grandeurs physiques dites "grandeurs de prise" caractéristiques de la position du support mobile dans l'espace. Dans ce but, on génère à nouveau au moyen de la caméra 2 une pluralité d'images réelles chacune résultant de la visée d'un point de contrôle 23 en faisant coïncider ledit point de contrôle avec le point de l'image aligné avec l'axe optique de la caméra. On procède à une telle visée successive d'un certain nombre de points de contrôle 23. Cette opération d'initialisation s'apparente donc à la précédente opération. Toutefois ici on ne considère qu'un seul point de contrôle 23 par image et celui-ci est toujours à la même place dans l'image. Il suffit donc de renseigner l'ordinateur 11 sur le numéro du point de contrôle. La position de chaque point de contrôle dans l'espace est transmise à l'ordinateur en même temps que les valeurs mesurées des grandeurs captées issues comme précédemment des différents capteurs 28 à 33 et traitées par les circuits électroniques 34 et 38.

Après cette opération d'initialisation, on procède à la prise de vues de la séquence d'images réelles désirée, les points de contrôle 23 restant alors en dehors du champ illustré en 24 sur la figure 1.

Pendant la prise de vues, les différentes valeurs mesurées par les capteurs 28 à 33 sont traitées en temps réel. Les signaux correspondant aux grandeurs physiques captées pour chaque image sont donc transmises par l'intermédiaire du circuit électronique d'acquisition 38 en temps réel et en synchronisme avec la génération des images sous la forme d'un paquet comportant en outre le code temporel (time-code). L'ordinateur 11 dispose donc pendant la prise de vues à chaque image réelle indexée par son code temporel (time-code), de toutes les informations lui permettant de calculer les paramètres de la caméra virtuelle 2a correspondante. Ces informations sont tout d'abord stockées dans un fichier associé à la prise de vues correspondante aux fins d'utilisation ultérieure. Simultanément l'ordinateur 11 génère des images de synthèse vues par la caméra virtuelle 2a à un rythme proche de celui du système de prise de vues réel 1. Cet impératif de temps réel implique donc que les images de synthèse puissent éventuellement être simplifiées par rapport aux images de synthèse définitives qui seront générées plus tard à partir du fichier mémorisé constitué pendant la prise de vues et qui seront effectivement utilisées pour la composition finale avec les images réelles.

Pendant la prise de vues on dispose donc en continu de deux sources d'images, les images réelles provenant du système de prise de vues 1 et les images de synthèse provenant d'un monde virtuel 25 géométriquement cohérentes avec celles-ci. Ces deux sources peuvent alors mélangées en temps réel et l'image hybride affichée sur un certain nombre de moniteurs de contrôle tels que 14 destinés aux réalisateurs, aux acteurs éventuels, aux cadreurs, etc. Dans un mode de réalisation préféré de l'invention comme illustré sur la figure 1, on renvoie l'image hybride ainsi obtenue sur le moniteur de visée 8. Le cadreur qui manipule la caméra 2 peut alors opérer comme si le système de prise de vues réel 1 était équipé d'une caméra mixte filmant un espace hybride mêlant l'espace réel et un espace virtuel assurant ainsi une excellente ergonomie et une grande souplesse du procédé de l'invention.

Le mélange des images réelles et des images de synthèse peut se faire d'une manière classique par incrustation, par exemple incrustation sur fond bleu ou incrustation selon la luminosité.

Le procédé de l'invention peut être aisément appliqué à la production d'images en studio dans laquelle par exemple des images réelles comprendront des acteurs réels filmés sur fond bleu. Les images de synthèse comprendront alors par exemple des décors, les images combinées comportant les acteurs réels se déplaçant devant les décors de synthèse.

Dans une autre application du procédé de l'invention à la production d'images en extérieur, les images réelles peuvent comprendre un décor réel tel qu'un décor naturel et les images de synthèse peuvent comprendre par exemple un élément architectural tel qu'un projet de bâtiment, les images combinées comportant alors l'élément architectural de synthèse dans son décor réel.

On pourra également envisager de générer par ordinateur des caches d'éléments réels présents dans la scène ou encore de substituer des éléments réels par des éléments de synthèse.

D'une manière générale on comprendra que le parfait couplage dynamique réalisé selon l'invention entre la caméra réelle et une caméra virtuelle permet toutes sortes de combinaisons entre des images réelles et des images virtuelles avec une parfaite cohérence géométrique.

## Revendications

1. Méthode pour générer une série d'images de sortie combinées hybrides chacune dérivée de données provenant d'images réelles combinée avec des données provenant d'images de synthèse, dans lesquelles lesdites données provenant d'une image réelle sont générées par une caméra réelle dans un monde réel et lesdites données provenant d'une image de synthèse sont générées par un ordinateur; ladite méthode étant caractérisée par le fait qu'elle comprend les étapes suivantes :
- définir plusieurs points de contrôle réels dans le monde réel;
- générer à l'aide de la caméra réelle des images réelles illustrant une région définie par lesdits points de contrôle;
- transférer les images réelles dans l'ordinateur;
- modéliser à l'aide de l'ordinateur les positions desdits points de contrôle réels;
- définir plusieurs points de contrôle virtuels dans lesdites images de synthèse; et
- aligner lesdits points de contrôle virtuels avec lesdits points de contrôle réels, image par image, pour générer une série d'images de sorties composite alignées.

2. Méthode pour générer une série d'images de sortie combinées hybrides selon la revendication 1, caractérisée par le fait que ladite étape de modélisation est réalisée à une fréquence proche de la fréquence à laquelle la caméra génère lesdites images réelles.

3. Méthode pour générer une série d'images de sortie combinées hybrides selon la revendication 1, caractérisée par le fait que lesdits points de contrôle réels sont en dehors du champs de prise de vue définitif de la caméra réelle lors de la génération des images réelles.

4. Méthode pour générer une série d'images de sortie combinées hybrides selon la revendication 1, caractérisée par le fait qu'elle inclut de plus une étape d'affichage en temps réel des images de sorties combinées hybrides sur un moniteur de contrôle.

5. Méthode pour générer une série d'images de sortie combinées hybrides selon la revendication 1, caractérisée par le fait qu'elle inclut de plus les étapes suivantes :
- afficher une image réelle générée par la caméra réelle sur un moniteur dudit ordinateur; et
- superposer un tracé graphique à ladite image affichée pour permettre l'entrée de la position des points de contrôle réels dans l'ordinateur.

6. Méthode pour générer une série d'images de sortie combinées hybrides selon la revendication 1, caractérisée par le fait que ladite étape de transfert des images réelles dans l'ordinateur inclut une sous-étape d'association d'un code de temps (time-code) à chacune des images réelles.

7. Méthode pour générer une série d'images de sortie combinées hybrides selon la revendication 1, caractérisée par le fait qu'elle inclut de plus une étape consistant à capturer des caractéristiques optiques et géométriques de ladite caméra réelle, lesdites caractéristiques étant sélectionnées parmi l'ouverture du diaphragme, la mise au point, la focale de l'objectif à focale variable (zoom), la vitesse d'obturation, l'élévation de la caméra, la rotation du support de la caméra autour de son axe vertical, l'inclinaison de la caméra autour de son axe horizontal, et la position du chariot support de la caméra par rapport à un rail de travelling.

8. Méthode pour générer une série d'images de sortie combinées hybrides selon la revendication 1, caractérisée par le fait qu'elle inclut une étape d'initialisation.

9. Appareil pour générer une série d'images de sortie combinées hybrides chacune dérivée de données provenant d'images réelles combinée avec des données provenant d'images de synthèse; ledit appareil étant caractérisé par le fait qu'il comprend :
- des moyens pour définir plusieurs points de contrôle réels dans le monde réel;
- une caméra réelle dans un monde réel pour générer des images réelles illustrant une région définie par lesdits points de contrôle;
- un ordinateur pour générer des images de synthèse;
- des moyens pour transférer les images réelles dans l'ordinateur;
- des moyens pour modéliser les positions desdits points de contrôle;
- des moyens pour définir plusieurs points de contrôle virtuels dans lesdites images de synthèse; et
- des moyens pour aligner lesdits points de contrôle virtuels avec lesdits points de contrôle réels, image par image, pour générer une série d'images de sorties composite alignées.

10. Appareil pour générer une série d'images de sortie combinées hybrides selon la revendication 9, caractérisé par le fait que lesdits moyens de modélisation fonctionnent à une fréquence proche de la fréquence à laquelle la caméra génère lesdites images réelles.

11. Appareil pour générer une série d'images de sortie combinées hybrides selon la revendication 9, caractérisé par le fait que lesdits points de contrôle réels sont en dehors du champs de prise de vue définitif de la caméra réelles lors de la génération des images réelles.

12. Appareil pour générer une série d'images de sortie combinées hybrides selon la revendication 9, caractérisé par le fait qu'il inclut de plus un moniteur de contrôle affichant en temps réel des images de sorties combinées hybrides.

13. Appareil pour générer une série d'images de sortie combinées hybrides selon la revendication 9, caractérisé par le fait qu'il inclut de plus :
- un moniteur d'ordinateur affichant une image réelle générée par la caméra réelle; et
- des moyens pour superposer un tracé graphique à ladite image affichée pour permettre l'entrée de la position des points de contrôle réels dans l'ordinateur.

14. Appareil pour générer une série d'images de sortie combinées hybrides selon la revendication 9, caractérisé par le fait qu'il inclut de plus des moyens pour associer un code de temps (time-code) à chacune des images réelles.

15. Appareil pour générer une série d'images de sortie combinées hybrides selon la revendication 9, caractérisé par le fait qu'il inclut de plus des moyens pour capturer des caractéristiques optiques et géométriques de ladite caméra réelle, lesdites caractéristiques étant sélectionnées parmi l'ouverture du diaphragme, ma mise au point, la focale de l'objectif à focale variable (zoom), la vitesse d'obturation, l'élévation de la caméra, la rotation du support de la caméra autour de son axe vertical, l'inclinaison de la caméra autour de son axe horizonta,l et la position du chariot support de la caméra par rapport à un rail de travelling.

16. Appareil pour générer une série d'images de sortie combinées hybrides selon la revendication 9, caractérisé par le fait qu'il inclut de plus des moyens d'initialisation.
